# EUROPEAN PATENT SPECIFICATION

(11) **EP 1 467 558 B1**
(45) Date of publication and mention of the grant of the patent: **20.10.2010**
(21) Application number: 04008472.5
(22) Date of filing: 07.04.2004
(51) Int. Cl.: H04N 5/45, G06F 3/14

(54) **Apparatus and method for performing pip in display device**
Vorrichtung und Verfahren für Bild in Bild-Darstellung
Dispositif et méthode pour réaliser la fonctionnalité d'image-en-image de télévision

(30) Priority: 11.04.2003 KR 2003023014
(43) Date of publication of application: 13.10.2004
(60) Divisional application: 10003167.3
(73) Proprietor: LG Electronics, Inc., Seoul 150-010 (KR)
(72) Inventor: Kim, Joo Won, dong Gumi-si Gyeongsangbuk-do (KR)
(74) Representative: Diehl, Hermann O. Th.

(56) References cited:
- EP-A- 1 089 561
- WO-A-02/25940
- US-A- 4 949 179
- US-A1- 2002 140 861

## Description

### CROSS-REFERENCE TO RELATED APPLICATIONS

This application claims the benefit of Korean Application No. P2003-023014, filed on April 11, 2003, which is hereby incorporated by reference as if fully set forth herein.

### BACKGROUND OF THE INVENTION

### Field of the Invention

The present invention relates to a display device, and more particularly, to an apparatus and method for performing a picture-in-picture (PIP) in a display device. Although the present invention is suitable for a wide scope of applications, it is particularly suitable for a sub-picture (or PIP) having a shape and size adjustable to a user's preference.

### Discussion of the Related Art

US 2002/0140861 A1 discloses a television receiver comprising the features of the preamble of the independent apparatus claim and performing the method of the preamble of the independent method claim. According to this document, the shape and transparency of a picture-in-picture (PiP) image is adjusted in accordance with a content of an auxiliary signal displayed in the PiP image.

A television having a processor that increases the viewability of a picture-in-picture display by producing a tracking window in a primary image display area and tracking a corresponding image portion in the picture-in-picture is disclosed by WO 02/25940 A1. The television has a user input device that receives a user input to enable a user to move the tracking

window to any given portion of the primary image display area. The user input also enables a user to adjust the size of the tracking window and to adjust a zoom level of the picture-in-picture.

US 4,949,179 discloses a picture display device allowing separate selection and displaying of main and sub programs. Summarizing, this document discloses normal picture-in-picture technology.

EP 1 089 561 A2 discloses a picture boarder frame generating circuit and digital television system using the same. According to this document, multiple moving pictures can be simultaneously displayed as picture-in-picture at changing positions.

As television broadcasting services have changed from the analog mode to the digital mode, the technologies in televisions have been greatly improved and developed both in quality and quantity. More specifically, the digital mode can operate a larger number of channels as compared to the analog mode, thereby providing an increased number of channels for television broadcasting. Also, the digital mode television provides the users with high resolution images of high definition (HD) quality.

Recently, in order to meet with the demands of the users, household television receivers have become slimmer for space efficiency, and the television screen has become wider for an increased real-life vision. In addition, digital televisions are currently being developed so that a plurality of other input signals other than broadcast signals, such as personal computers, can be displayed simultaneously. For example, a picture-in-picture (PIP) function is applied and used. Generally, the picture-in-picture (PIP) function refers to a sub-picture being displayed over a main picture on the screen. Herein, the sub-picture may either be a reduced version of the main picture displayed in a smaller frame or a completely different picture from another channel displayed in a smaller frame.

However, in the related art display device, only a sub-picture (or PIP) having a predetermined shape and size is provided, and the position of the sub-picture (or PIP) cannot be changed or moved.

### SUMMARY OF THE INVENTION

Accordingly, the present invention is directed to an apparatus and method for performing PIP in a display device that substantially obviates one or more problems due to limitations and disadvantages of the related art. This object is solved by the apparatus of independent claim 1 and the method of independent claim 11. Further advantageous features, aspects, and details of the invention are evident from the dependent claims. The claims are a first non-limiting approach to defining the invention in general terms.

An aspect of the present invention is to provide an apparatus and method for performing PIP in a display device that displays PIP having a shape and size adjustable to a user's preference.

Additional advantages, aspects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these aspects and other advantages and in accordance with the purpose of the invention, as embodied and broadly described herein, an apparatus for performing PIP in a display device includes a first video processor converting a first video signal into data representing a displayable main picture, a second video processor converting a second video signal into data representing a displayable sub-picture, and a microcomputer controlling the first video processor and the second video processor, so that at least one of the main picture data and the sub-picture data is partially outputted in accordance with a shape of the sub-picture.

The microcomputer advantageously provides a user with a sub-picture setting menu for selecting and modifying the sub-picture shape. Preferably, the sub-picture setting menu includes a plurality of selectable sample shapes, and/or a selectable option for creating and adding new sub-picture sample shapes based on the user's preference.

Suitably, the microcomputer either controls the first video processor, so as to output a portion of the main picture data corresponding to an area of the screen excluding the sub-picture shape selected or modified by the user, or controls the second video processor, so as to output a portion of the sub-picture data corresponding to the sub-picture shape selected or modified by the user.

It is preferred that the microcomputer displays the sub-picture on a screen depending upon a pixel information corresponding to the sub-picture shape selected or modified by the user.

In another aspect of the present invention, a method for performing PIP in a display device includes selecting or modifying a sub-picture shape by a user, converting a first video signal and a second video signal into data representing a main picture and data representing a sub-picture, respectively; outputting at least one of the main picture data and the sub-picture data partially outputted depending upon the sub-picture shape selected or modified by the user, and combining the outputted main picture data and sub-picture data.

Preferably, the user selects or modifies the sub-picture shape by using a sub-picture setting menu being displayed on a screen. The user may either selects any one a plurality of sub-picture sample shapes included in the sub-picture setting menu, or may modify a pixel information of the sub-picture from the sub-picture setting menu, so as to modify a shape of the sub-picture.

The step of outputting the main picture data and the sub-picture data advantageously comprises one of selectively outputting a portion of the main picture data corresponding to an area of the screen excluding the selected or modified sub-picture shape, and selectively outputting a portion of the sub-picture data corresponding to the selected or modified sub-picture shape.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings;

FIG. 1 illustrates a block diagram of an apparatus for performing PIP in a display device according to the present invention;

FIG. 2 illustrates a block diagram showing a detailed structure of the display device according to the present invention;

FIG. 3 illustrates a flow chart of a method for performing PIP in the display device according to the present invention;

FIG. 4 illustrates a sub-picture setting menu according to an embodiment of the present invention;

FIG. 5 illustrates a sub-picture according to a first embodiment of the present invention; and

FIG. 6 illustrates the sub-picture according to a second embodiment of the present invention.

### DETAILED DESCRIPTION OF THE INVENTION

Reference will now be made in detail to the preferred embodiments of the present invention, examples of which are illustrated in the accompanying drawings. Wherever possible, the same reference numbers will be used throughout the drawings to refer to the same or like parts.

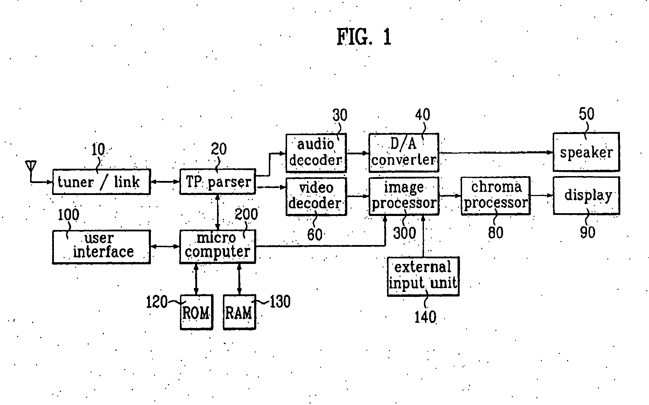

FIG. 1 illustrates a block diagram of an apparatus for performing a sub-picture (PIP) in a display device according to the present invention.

Referring to FIG. 1, among a plurality of broadcast signals, a tuner 10 selectively receives a broadcast signal selected by a user through an antenna. Then, a TP parser 20 divides the broadcast signal received from the tuner into a video signal and an audio signal. The divided audio signal and video signal are then inputted to a video decoder 60 and an audio decoder 30, respectively. The audio decoder 30 decodes the audio signal outputted from the TP parser 20 and transmits the decoded audio signal to a digital/analog (D/A) converter 40. Then, the D/A converter 40 converts the decoded audio signal so that the converted decoded audio signal is outputted from a speaker 50 as a sound.

The video decoder 60 decodes the video signal outputted from the TP parser 20 and supplies the decoded video signal to a video processor 300. Herein, the decoded video signal includes a first video signal for displaying a main picture, and a second video signal for displaying a sub-picture. In order to display a main picture and a sub-picture on a display 90 depending upon a user command inputted through an interface, the video processor 300 converts the first video signal into a displayable main picture data and converts the second video signal into a displayable sub-picture data. The video processor 300 then combines the main picture data and the sub-picture data. In addition, the video processor 300 can modify the shape and size of the sub-picture overlapping the main picture in accordance with the user command. Moreover, the video processor 300 converts video signals inputted from an external input unit 140 into displayable signals.

A chroma processor 80 processes the video signal including one of a message and an icon outputted from the video processor 300, so that a message or an icon can be displayed on the display 90.

A microcomputer 200 receives a user command inputted from the user interface 100. The microcomputer 200 then controls the video processor 300, so that the shape and size of the sub-picture can be modified in accordance with the user command. In addition, the microcomputer 200 outputs corresponding control signals depending upon image settings and related history and information stored in a ROM 120 and a RAM 130.

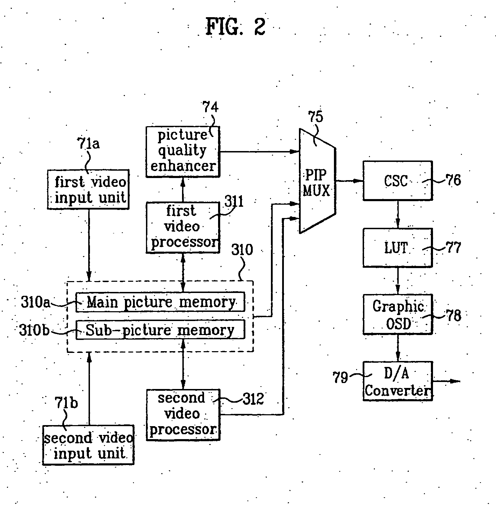

FIG. 2 illustrates a block diagram showing a detailed structure of the display device according to the present invention.

Referring to FIG. 2, a first video input unit 71a receives the first video signal from the video decoder 60, and a second video input unit 71b receives the second video signal from the video decoder 60. The first and second video signals inputted to the first and second video input units 71a and 71b are divisionally stored in a memory 310. More specifically, for example, the first video signal is stored in a main picture memory 310a, and the second video signal is stored in a sub-picture memory 310b.

A first video processor 311 reads the first video signal stored in the memory 310 and then converts the first video signal into a displayable main picture data. The main picture data converted at the first video processor 311 is then inputted to a picture quality enhancer 74 in order to enhance the picture quality of the converted main picture data. Additionally, a second video processor 312 converts the second video signal, stored in the memory 310, into a displayable sub-picture data. The first and second video processors 311 and 312 not only receives the first and second video signals stored in the memory 310, but can also directly receive the first and second video signals from the first and second video input units 71a and 71b.

A PIP Multiplexer 75 receives the main picture data from the picture quality enhancer 74 and receives the sub-picture data from the second video processor 312. The PIP MUX 75 then combines the main picture data and the sub-picture data in order to display the sub-picture on the main picture.

A color space converter (CSC) 76 converts the combined data from the PIP MUX 75 into either Y, Pb, and Pr signals or R, G, and B signals. A look-up table (LUT) 77 controls and converts the Y, Pb, and Pr signals or R, G, and B signals based on a pre-determined screen information. The LUT 77 then supplies the outputted Y, Pb, and Pr signals or R, G, and B signals to the chroma processor 80 through a graphic on screen display (OSD) 78 and a D/A converter 79.

The method for processing a sub-picture by using the device for processing a sub-picture in the display device according to the present invention will now be described in detail.

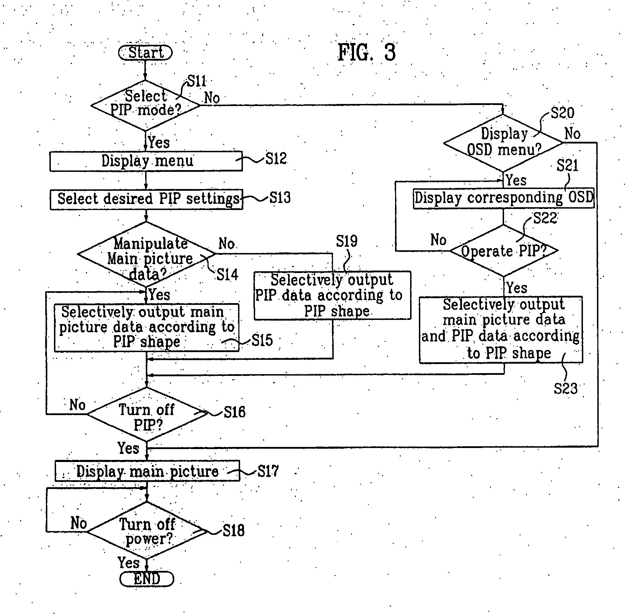

FIG. 3 illustrates a flow chart of a method for processing the sub-picture in the display device according to the present invention.

Referring to FIG. 3, the microcomputer 200 determines whether the user desires a sub-picture to be displayed on a predetermined area of the main picture. In other words, the microcomputer 200 determines whether the user selects a sub-picture mode (S11).

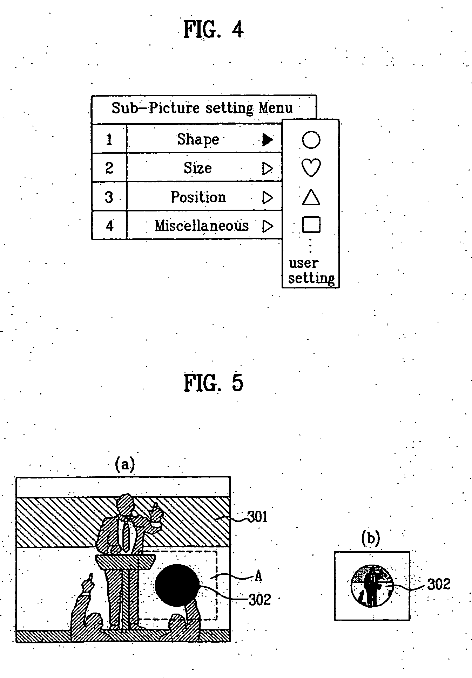

Depending upon the result of step 11, when the microcomputer 200 determines that the user has selected the sub-picture mode, then the microcomputer 200 displays a "Sub-picture setting menu" on the display 90 (S12), as shown in FIG. 4. The Sub-picture setting menu includes a plurality of sub-picture sample shapes, which the user can select according to his or her liking. The menu also includes a "User Setting" selectable option allowing the user to modify the shape of the sub-picture. For example, the sub-picture samples include the shapes of a circle, a heart, a triangle, a square or rectangle, and so on. The user can select any one of the shapes by using a remote controller. In addition, when the user selects the User Setting option, a window allowing the user to modify and create a desired sub-picture shape is supplied. If the user desires a diamond (or lozenge) shape sub-picture, the user selects the fourth sub-picture sample shape (*i.e.*, a square or rectangle) and uses the remote controller to replace the positions of each angular point, so as to modify the square or rectangle into a diamond (or lozenge) shape. Herein, each of the angular points of the square or rectangle can be replaced by modifying the corresponding pixel information *(i.e.,* the pixel address).

The above-described diamond shaped sub-picture created according to the user's settings can be added as a sub-picture sample shape. When the user desires to add the newly formed sub-picture sample shape in the Sub-picture setting menu, the microcomputer 200 upgrades the Sub-picture setting menu and stores the upgraded menu in either the RAM 130 or the memory 310.

The Sub-picture setting menu includes buttons for controlling the size of the sub-picture. For example, when the user selects the "Size" selectable option in the Sub-picture setting menu, as shown in FIG. 4, an "Enlarge" button and a "Reduce" button are displayed on the screen. When the user selects the Enlarge button by using the remote controller, the size of the sub-picture is increased. Conversely, when the user selects the Reduce button, the size of the sub-picture is decreased.

The Sub-picture setting menu also includes a plurality of buttons for controlling the position of the sub-picture. For example, when the user selects the "Position" selectable option in the Sub-picture setting menu, as shown in FIG. 4, an "Up" button, a "Down" button, a "Left" button, and a "Right" button are displayed. When the user selects either the Up button or the Down button, the position of the sub-picture in the display 90 moves either up or down, respectively. On the other hand, when the user selects either the Left button or the Right button, the displayed sub-picture moves to either the left side or the right side in the display 90.

Furthermore, the Sub-picture setting menu includes a button allowing the user to select the number of sub-pictures to be displayed on the display 90. When the user selects the "Miscellaneous" selectable option on the Sub-picture setting menu, as shown in FIG. 4, a plurality of buttons for selecting and/or controlling the number of displayed sub-pictures, the emphasis of the sub-picture in contrast with the main picture, and so on, are displayed.

When the user selects the shape and the size of the sub-picture (S 13), the microcomputer 200 identifies the display mode in the sub-picture area (S14). The display mode is previously determined by the user. Two types of sub-picture display modes are supplied in the present invention. The display modes include manipulating (or modifying) the main picture data according to the sub-picture shape selected by the user, and manipulating (or modifying) the sub-picture data according to the sub-picture shape selected by the user.

As shown in FIG. 5A, when selecting the mode of manipulating the main picture data, the first video processor 311 transmits the main picture data corresponding to the remaining area of the screen, excluding the circle-shaped sub-picture 302 selected by the user, to the PIP MUX 75, and the second video processor 312 transmits the entire sub-picture data to the PIP MUX 75 (S 15). At this point, the microcomputer 200 controls the first video processor 311 by using the pixel information of the selected sub-picture, so as to selectively supply the main picture data to the PIP MUX 75.

The sub-picture data supplied to the PIP MUX 75 is a data corresponding to a square-shaped sub-picture, however, a circle-shaped sub-picture 302 is displayed on the display 90. The peripheral area (A) of the circle-shaped sub-picture 302 is an area where the sub-picture overlaps the main picture. However, the emphasis of the sub-picture in contrast with the main picture may be controlled, so as to display only the main picture in the area (A).

As shown in FIG. 5B, when selecting the mode of manipulating the sub-picture data, the first video processor 311 supplies the entire main picture data to the PIP MUX 75, and the second video processor 312 supplies only the sub-picture data, corresponding to the circle-shaped sub-picture 302 selected by the user, to the PIP MUX 75 (S19). At this point, the microcomputer 200 controls the second video processor 312 by using the pixel information of the selected sub-picture, so as to selectively supply sub-picture data to the PIP MUX 75. Accordingly, the circle-shaped sub-picture 302 is displayed on the display 90.

Other examples may also be applied in the present invention, apart from the two types described above. For example, when the sub-picture data corresponding to circle-shaped sub-picture 302, selected by the user, and the main picture data corresponding to the remaining picture area excluding the circle-shaped sub-picture 302 is supplied to the PIP MUX 75, the circle-shaped sub-picture 302 is displayed on the display 90. The microcomputer 200 controls the first and second video processors 311 and 312 by using the pixel information of the selected sub-picture, so as to selectively supply the main picture data and the sub-picture data to the PIP MUX 75.

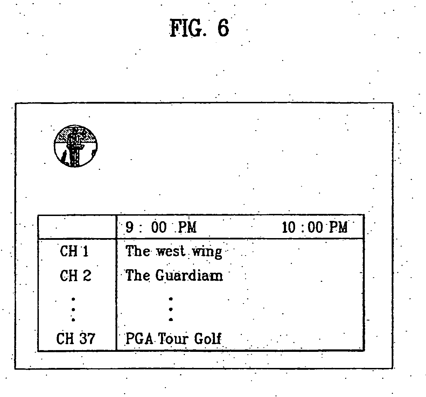

Another example will be described with reference to FIG. 6. When an OSD screen is displayed (S20), the OSD data corresponding to the remaining area of the screen excluding the circle-shaped sub-picture 302 area and the sub-picture data corresponding to the circle-shaped sub-picture 302 is supplied to the PIP MUX 75, thereby displaying the circle-shaped sub-picture 302 on the OSD screen (S21 to S23).

The PIP MUX 75 receives the main picture data and the sub-picture data from the first video processor 311 and the second video processor 312, respectively, combines the main picture data and the sub-picture data, and, then, outputs the combined data. At this point, the PIP MUX 75 controls the emphasis of the sub-picture in contrast with the main picture in accordance with the control of the microcomputer 200.

Accordingly, the apparatus and method for performing PIP in the display device according to the present invention provides a sub-picture setting menu for modifying the sub-picture (*e.g.*, PIP), so as to adjust not only the shape but also the size and position of the sub-picture. Therefore, the user can select and modify the sub-picture according to his or her preference.

It will be apparent to those skilled in the art that various modifications and variations can be made in the present invention without departing from the spirit or scope of the inventions. Thus, it is intended that the present invention covers the modifications and variations of this invention provided they come within the scope of the appended claims and their equivalents.

## Claims

1. An apparatus for performing a picture-in-picture (PIP) function in a display device, the apparatus comprising:
a first video processor (311) converting a first video signal into data representing a displayable main picture;
a second video processor (312) converting a second video signal into data representing a displayable sub-picture;
a microcomputer (200) controlling the first video processor (311) and the second video processor (312), so that at least one of the main picture data and the sub-picture data is outputted in accordance with a shape of the sub-picture; and
a PIP multiplexer (75) combining the main picture data and the sub-picture data in order to display the sub-picture on the main picture, and providing the combined data to a display (90) having a screen;
**characterized in that**
the microcomputer (200) is adapted to control the second video processor (312), so as to output to the PIP multiplexer (75) a portion of the sub-picture data corresponding to the sub-picture shape selected or modified by a user; and
the microcomputer (200) is adapted to control the first video processor (311), so as to output to the PIP multiplexer (75) a portion of the main picture data corresponding to an area of the screen excluding a portion of the main picture data corresponding to the sub-picture shape selected or modified by the user.

2. The apparatus according to claim 1, wherein the microcomputer (200) provides a user with a sub-picture setting menu for selecting and modifying the sub-picture shape.

3. The apparatus according to claim 2, wherein the sub-picture setting menu includes a plurality of selectable sample shapes.

4. The apparatus according to claim 3, wherein the sub-picture setting menu further includes a selectable option for creating and adding new sub-picture sample shapes based on the user's preference.

5. The apparatus according to claim 2, wherein the sub-picture setting menu includes a plurality of selectable options for controlling a size and a position of the sub-picture.

6. The apparatus according to claim 1, wherein the microcomputer (200) displays the sub-picture on the screen depending upon pixel information corresponding to the sub-picture shape selected or modified by the user.

7. The apparatus according to claim 1, further comprising:
a first memory (310a) storing the first video signal; and a second memory (310b) storing the second video signal.

8. A method for performing a picture-in-picture (PIP) function in a display device, the method comprising:
(S13) selecting or modifying a sub-picture shape;
converting a first video signal and a second video signal into data representing a main picture and data representing a sub-picture, respectively;
(S15, S19, S23) outputting at least one of the main picture data and the sub-picture data depending upon the sub-picture shape selected or modified by the user; and combining the outputted main picture data and sub-picture data in order to display the sub-picture on the main picture;
**characterized in that**
the sub-picture shape is selected or modified by a user; and
the step of outputting the main picture data and the sub-picture data comprises selectively outputting a portion of the main picture data corresponding to an area of a screen excluding a portion of the main picture data corresponding to the selected or modified sub-picture shape.

9. The method according to claim 8, wherein the user selects or modifies the sub-picture shape by using a sub-picture setting menu being displayed on the screen.

10. The method according to claim 9, wherein the user selects any one a plurality of sub-picture sample shapes included in the sub-picture setting menu.

11. The method according to claim 9, wherein the user modifies a pixel information of the sub-picture from the sub-picture setting menu, so as to modify a shape of the sub-picture.

12. The method according to claim 9, wherein the sub-picture setting menu includes a plurality of selectable options for controlling a size and a position of the sub-picture.

13. The method according to claim 8, wherein the outputting the main picture data and the sub-picture data comprises selectively outputting a portion of the main picture data corresponding to an area of the screen excluding the selected or modified sub-picture shape and selectively outputting a portion of the sub-picture data corresponding to the selected or modified sub-picture shape, simultaneously.

## Patentansprüche

1. Gerät zum Ausführen einer Bild-in-Bild- (PIP) Funktion in einer Anzeigevorrichtung, wobei das Gerät folgendes umfasst:
einen ersten Videoprozessor (311), der ein erstes Videosignal in Daten umwandelt, die ein anzeigbares Hauptbild darstellen;
einen zweiten Videoprozessor (312), der ein zweites Videosignal in Daten umwandelt, die ein anzeigbares Nebenbild darstellen;
einen Mikrocomputer (200), der den ersten Videoprozessor (311) und den zweiten Videoprozessor (312) steuert, so dass mindestens entweder die Hauptbilddaten oder die Nebenbilddaten gemäß einer Form des Nebenbildes ausgegeben werden; und
einen PIP-Multiplexer (75), der die Hauptbilddaten und die Nebenbilddaten kombiniert, um das Nebenbild auf dem Hauptbild anzuzeigen, und die kombinierten Daten für ein Display (90) bereitstellt, das einen Bildschirm aufweist;
**dadurch gekennzeichnet, dass**
der Mikrocomputer (200) dazu ausgebildet ist, den zweiten Videoprozessor (312) zu steuern, um an den PIP-Multiplexer (75) einen Teil der Nebenbilddaten auszugeben, welcher der Nebenbildform entspricht, die von einem Benutzer ausgewählt oder geändert wird; und
der Mikrocomputer (200) dazu ausgebildet ist, den ersten Videoprozessor (311) zu steuern, um an den PIP-Multiplexer (75) einen Teil der Hauptbilddaten auszugeben, der einem Bereich des Bildschirms entspricht, der einen Teil der Hauptbilddaten ausschließt, welcher der Nebenbildform entspricht, die von dem Benutzer ausgewählt oder geändert wird.

2. Gerät gemäß Anspruch 1, wobei der Mikrocomputer (200) einem Benutzer ein Nebenbild-Einstellungsmenü zum Auswählen und Ändern der Nebenbildform bereitstellt.

3. Gerät gemäß Anspruch 2, wobei das Nebenbild-Einstellungsmenü eine Vielzahl von auswählbaren Beispielformen umfasst.

4. Gerät gemäß Anspruch 3, wobei das Nebenbild-Einstellungsmenü ferner eine auswählbare Option zum Erstellen und Hinzufügen neuer Nebenbild-Beispielformen basierend auf der Wahl des Benutzers umfasst.

5. Gerät gemäß Anspruch 2, wobei das Nebenbild-Einstellungsmenü eine Mehrzahl von auswählbaren Optionen zum Steuern einer Größe und einer Position des Nebenbilds umfasst.

6. Gerät gemäß Anspruch 1, wobei der Mikrocomputer (200) das Nebenbild auf dem Bildschirm in Abhängigkeit von Pixelinformationen anzeigt, die der Nebenbildform entsprechen, die von dem Benutzer ausgewählt oder geändert wird.

7. Gerät gemäß Anspruch 1, ferner umfassend:
einen ersten Speicher (310a), der das erste Videosignal speichert; und
einen zweiten Speicher (310b), der das zweite Videosignal speichert.

8. Verfahren zum Ausführen einer Bild-in-Bild- (PIP) Funktion in einer Anzeigevorrichtung, wobei das Verfahren folgende Schritte umfasst:
(S13) Auswählen oder Ändern einer Nebenbildform;
Umwandeln eines ersten Videosignals und eines zweiten Videosignals jeweils in Daten, die ein Hauptbild darstellen, und in Daten, die ein Nebenbild darstellen;
(S15, S19, S23) Ausgeben mindestens entweder der Hauptbilddaten oder der Nebenbilddaten in Abhängigkeit von der Nebenbildform, die von dem Benutzer ausgewählt oder geändert wird; und
Kombinieren der ausgegebenen Hauptbilddaten und Nebenbilddaten, um das Nebenbild auf dem Hauptbild anzuzeigen;
**dadurch gekennzeichnet, dass**
die Nebenbildform von einem Benutzer ausgewählt oder geändert wird; und
der Schritt des Ausgebens der Hauptbilddaten und der Nebenbilddaten das wahlweise Ausgeben eines Teils der Hauptbilddaten umfasst, der einem Bereich eines Bildschirms entspricht, der einen Teil der Hauptbilddaten ausschließt, welcher der ausgewählten oder geänderten Nebenbildform entspricht.

9. Verfahren gemäß Anspruch 8, wobei der Benutzer die Nebenbildform auswählt oder ändert, indem er ein Nebenbild-Einstellungsmenü verwendet, das auf dem Bildschirm angezeigt wird.

10. Verfahren gemäß Anspruch 9, wobei der Benutzer eine beliebige Form aus einer Vielzahl von Nebenbild-Beispielformen auswählt, die in dem Nebenbild-Einstellungsmenü enthalten sind.

11. Verfahren gemäß Anspruch 9, wobei der Benutzer eine Pixelinformation des Nebenbilds aus dem Nebenbild-Einstellungsmenü ändert, um eine Form des Nebenbilds zu ändern.

12. Verfahren gemäß Anspruch 9, wobei das Nebenbild-Einstellungsmenü eine Mehrzahl von auswählbaren Optionen zum Steuern einer Größe und einer Position des Nebenbilds umfasst.

13. Verfahren gemäß Anspruch 8, wobei das Ausgeben der Hauptbilddaten und der Nebenbilddaten gleichzeitig das wahlweise Ausgeben eines Teils der Hauptbilddaten, die einem Bereich des Bildschirms entsprechen, der die ausgewählte oder geänderte Nebenbildform ausschließt, und das wahlweise Ausgeben eines Teils der Nebenbilddaten, welcher der ausgewählten oder geänderten Nebenbildform entspricht, umfasst.

## Revendications

1. Appareil pour mettre en oeuvre une fonction image-dans-l'image (PIP) dans un dispositif d'affichage, l'appareil comprenant un premier processeur vidéo (311) convertissant un premier signal vidéo en données représentant une image principale affichable ; un second processeur vidéo (312) convertissant un second signal vidéo en données représentant une sous-image affichable ; un micro-ordinateur (200) commandant le premier processeur vidéo (311) et le second processeur vidéo (312), de telle sorte que l'une au moins des données d'image principale et des données de sous-image est produite selon une forme de sous-image ; et
un multiplexeur PIP (75) combinant les données d'image principale et les données de sous-image pour afficher la sous-image sur l'image principale, et fournissant les données combinées à un affichage (90) ayant un écran ;
**caractérisé en ce que**
le micro-ordinateur (200) est adapté à commander le second processeur vidéo (312), de telle sorte qu'il fournisse au multiplexeur PIP (75) une portion des données de sous-image correspondant à la forme de sous-image sélectionnée ou modifiée par un utilisateur ; et
le micro-ordinateur (200) est adapté à commander le premier processeur vidéo (311), de telle sorte qu'il fournisse au multiplexeur PIP (75) une portion des données d'image principale correspondant à une zone de l'écran excluant une portion des données d'image principale correspondant à la forme de sous-image sélectionnée ou modifiée par l'utilisateur.

2. Appareil selon la revendication 1, dans lequel le micro-ordinateur (200) fournit à l'utilisateur un menu de réglage de sous-image pour sélectionner et modifier la forme de la sous-image.

3. Appareil selon la revendication 2, dans lequel le menu de réglage de sous-image inclut une pluralité de formes de spécimen sélectionnables.

4. Appareil selon la revendication 3, dans lequel le menu de réglage de sous-image inclut une option sélectionnable pour créer et ajouter de nouvelles formes de spécimen de sous-image sélectionnables sur la base des préférences de l'utilisateur.

5. Appareil selon la revendication 2, dans lequel le menu de réglage de sous-image inclut une pluralité d'options sélectionnables pour commander une taille et une position de la sous-image.

6. Appareil selon la revendication 1, dans lequel le micro-ordinateur (200) affiche la sous-image sur l'écran en fonction des informations de pixels correspondant à la forme de sous-image sélectionnée ou modifiée par l'utilisateur.

7. Appareil selon la revendication 1, comprenant, en outre :
une première mémoire (310a) mémorisant le premier signal vidéo ; et
une seconde mémoire (310b) mémorisant le second signal vidéo.

8. Procédé pour mettre en oeuvre une fonction image-dans-l'image (PIP) dans un dispositif d'affichage, le procédé comprenant (S13)
la sélection ou la modification d'une forme de sous-image ;
la conversion d'un premier signal vidéo et d'un second signal vidéo, respectivement, en données représentant une image principale et en données représentant une sous-image ;
la production (S15, S19, S23) de l'une au moins des données d'image principale et des données de sous-image en fonction de la forme de sous-image sélectionnée ou modifiée par l'utilisateur ; et
la combinaison des données d'image principale et des données de sous-image fournies à des fins d'affichage de la sous-image sur l'image principale ;
**caractérisé en ce que**
la forme de sous-image est sélectionnée ou modifiée par un utilisateur ; et
l'étape de production des données d'image principale et des données de sous-image comprend la production sélective d'une portion des données d'image principale correspondant à une zone d'un écran excluant une portion des données d'image principale correspondant à la forme de sous-image sélectionnée ou modifiée.

9. Procédé selon la revendication 8, dans lequel l'utilisateur sélectionne ou modifie la forme de sous-image en utilisant un menu de réglage de sous-image en cours d'affichage sur l'écran.

10. Procédé selon la revendication 9, dans lequel l'utilisateur sélectionne l'une quelconque d'une pluralité de formes de spécimen de sous-image incluses dans le menu de réglage de sous-image.

11. Procédé selon la revendication 9, dans lequel l'utilisateur modifie une information de pixel de la sous-image depuis le menu de réglage de sous-image, de façon à modifier une forme de la sous-image.

12. Procédé selon la revendication 9, dans lequel le menu de réglage de sous-image inclut une pluralité d'options sélectionnables pour commander une taille et une position de la sous-image.

13. Procédé selon la revendication 8, dans lequel la production des données d'image principale et des données de sous-image comprend, simultanément, la production sélective d'une portion des données d'image principale correspondant à une zone de l'écran excluant la forme de sous-image sélectionnée ou modifiée et la production sélective d'une portion des données de sous-image correspondant à la forme de sous-image sélectionnée ou modifiée.
